**Europäisches Patentamt**

**European Patent Office**

**Office européen des brevets**

(11) Veröffentlichungsnummer: **0 262 511**
**A2**

(12) # EUROPÄISCHE PATENTANMELDUNG

(21) Anmeldenummer: **87113525.7**

(22) Anmeldetag: **16.09.87**

(51) Int. Cl.⁴: **B23D 36/00**

(30) Priorität: **27.09.86 DE 3632917**

(43) Veröffentlichungstag der Anmeldung:
**06.04.88 Patentblatt 88/14**

(84) Benannte Vertragsstaaten:
**AT BE CH DE ES FR IT LI NL SE**

(71) Anmelder: **BBC Brown Boveri
Aktiengesellschaft
Kallstadter Strasse 1
D-6800 Mannheim 31(DE)**

(72) Erfinder: **Ibach, Robert, Dipl.-Ing.
Kleeweg 9
D-5480 Schwerte(DE)**
Erfinder: **Mertens, Manfred, Dipl.-Ing.
Rilkeweg 7
D-4714 Selm(DE)**

(74) Vertreter: **Rupprecht, Klaus, Dipl.-Ing. et al
c/o BROWN, BOVERI & CIE AG Postfach 10
03 51 Zentralbereich Patente
D-6800 Mannheim 1(DE)**

(54) **Verfahren und Schaltungsanordnung zum Minimieren der Reststücke beim Trennen von erwärmten Metallstangen.**

(57) Anordnung zum Minimieren der Reststücke beim Trennen von erwärmten Metallstangen

Bei einer Anordnung zum Minimieren der Reststücke beim Trennen von erwärmten Metallstangen mittels einer Schereinrichtung in Blöcke bestimmter Länge werden die Stangen durch eine Erwärmungseinrichtung transportiert und es ist ein Sensor mindestens in dem zweifachen Blockabstand vor der Schereinrichtung vorgesehen, mit dessen Hilfe die Stange entsprechend der abzutrennenden Länge eingestellt wird. Die Einspannlänge beträgt in etwa den 0,5-fachen Wert des Durchmessers bzw. der Kantenlänge der Stange, so daß im ungünstigsten Fall das Reststück, welches als Schrott ausgeschieden wird, bei einer Blocklänge von 1000 mm und bei einer Stange mit 100 mm Kantenlänge maximal 1050 mm lang sein kann, um den Ausschuß so gering wie möglich zu halten und das Reststück mindestens als vorletzter Block oder früher abgeschnitten wird.

Figur 3

# Verfahren und Schaltungsanordnung zum Minimieren der Reststücke beim Trennen von erwärmten Metallstangen

Die Erfindung bezieht sich auf ein Verfahren und eine Schaltungsanordnung zum Minimieren der Reststücke beim Trennen von erwärmten Metallstangen mittels einer Schereinrichtung in Blöcke bestimmter Länge, wobei die Stangen mittels einer Transporteinrichtung durch eine Erwärmungseinrichtung transportiert werden und entsprechend der abzutrennenden Länge auf der Schereinrichtung eingestellt werden, wobei ein Sensor mindestens in dem zweifachen Blockabstand vor der Schereinrichtung vorgesehen ist, der das Ende der Stange feststellt.

Bei den bisher bekannten Verfahren bleibt als Reststück einer Stange immer ein mehr oder weniger langes Stück über, welches als Schrott ausgeschieden werden muß. Dieses Stück kann maximal eine Blocklänge plus die zum Scheren notwendige Einspannlänge betragen. Die Einspannlänge beträgt in etwa den 0,5-fachen Wert des Durchmessers bzw. der Kantenlänge der Stange.

Die abzuscherenden Blöcke können für Gesenkschieden zur Herstellung von langen Schmiedeteilen, wie z.B. Kurbelwellen oder Vorderachsen, die länger als 1000 mm sind, verwendet werden. Im ungünstigsten Fall ist also das Reststück, welches als Schrott ausgeschieden wird, länger als 1000 mm, z.B. bei einer Stange von 100 mm Kantenlänge kann das Reststück maximal 1050 mm lang sein. Können aus einer Stange mit einer Stangenlänge von 11050 mm z.B. nur 10 Blöcke geschnitten werden, ist ein derartiger Abfall von 1050 mm nicht zu vertreten.

Der Erfindung liegt daher die Aufgabe zugrunde, den Ausschuß so gering wie möglich zu halten und Reststücke, deren Länge größer als die geforderte Blocklänge ist, mit Sicherheit zu vermeiden.

Gemäß der Erfindung wird die Aufgabe dadurch gelöst, daß das Reststück mindestens als vorletzter Block oder früher abgeschnitten wird. Nach einer Ausführungsform der Erfindung wird dies dadurch erreicht, daß das Stangenende die Enderkennung einschaltet und der zurückgelegte Weg bis zm nächsten Stillsetzen (Abscheren) und damit die Stangenrestlänge festgestellt, daß in einem Rechenbaustein die Stangenrestlänge durch den Mittelwert der Blocklängen dividiert wird und aus dem Ergebnis, das aus einer ganzen Zahl links vom Komma und einer Zahl zwischen 0 und 1 rechts vom Komma besteht, die ganze Zahl die Anzahl der Blöcke der Reststange ergibt, daß in einem Rechenbaustein das Produkt aus der Anzahl der Blöcke und dem Mittelwert der Blocklänge gebildet und von der Stangenrestlänge subtrahiert wird, wobei sich die Länge des Reststückes ergibt, und daß als nächster Block das Reststück mit der Restlänge abgeschnitten wird. Bei einer ähnlichen Anordnung wird der gleiche Effekt dadurch erreicht, daß das Stangenende die Enderkennung einschaltet und der zurückgelegte Weg bis zum nächsten Stillsetzen und damit die Stangenrestlänge festgestellt wird, daß in einem Rechenbaustein die Stangenrestlänge durch den Mittelwert der Blocklängen dividiert wird und aus dem Ergebnis, das aus einer ganzen Zahl n links vom Komma und einer Zahl zwischen 0 und 1 rechts vom Komma besteht, die Zahl zwischen 0 und 1 in einem Rechenbaustein mit dem Mittelwert der Blocklängen multipliziert wird, wobei das Produkt die Länge des Reststückes ergibt und daß als nächster Block das Reststück mit der Restlänge r abgeschnitten wird.

In den Figuren ist die Erfindung schematisch dargestellt.

Es zeigen:

Fig. 1 + 2 Eine schematische Darstellung der Erfindung;

Fig. 3 ein schematisches Ausführungsbeispiel der Erfindung und

Fig. 4 + 5 die Funktionsweise des Rechners.

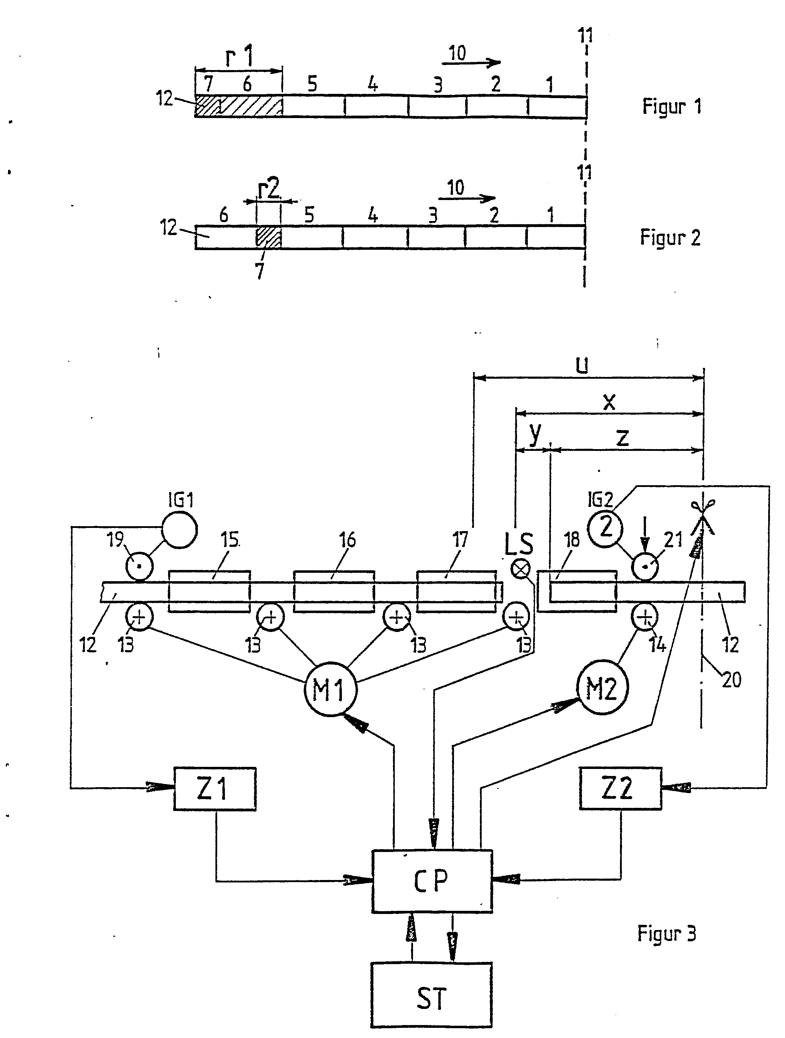

Anhand von Fig. 1 soll erläutert werden, wie bisher die Metallstangen abgeschert wurden. Der Pfeil 10 zeigt die Transportrichtung der Metallstange 12 und die Linie 11 die Lage der Scherebene. Jeweils nach einem Transport entsprechend der Länge der Blöcke werden die Blöcke 1, 2, 3, 4 und 5 abgeschnitten und bei Einspannen des Blockes 7 zum Abtrennen des Blockes 6 ergeben sich Schwierigkeiten, da die Einspannfläche zu kurz ist. Bei dieser bisherigen Betriebsweise mußten daher die Blöcke 6 und 7 als Schrott ausgeschieden werden. In Fig. 2 ist dargestellt, wie gemäß der Erfindung der Verlauf sein soll. Zunächst werden wieder die Blöcke 1,2,3 und 4 ab getrennt und dann wird das Reststück 7 mit der Länge r2 abgetrennt, da der Block 6 eingespannt werden kann zum Abtrennen des Reststückes 7. Der Block 6 besitzt jetzt bereits die vorgeschriebene Länge. Der Block 6 kann also bei diesem Verfahren ebenfalls benutzt werden.

In Fig. 3 ist ein schematisches Ausführungsbeispiel der Erfindung dargestellt. Die Metallstangen 12 werden mittels Rollen 13 und 14 durch die Induktionsspulen 15, 16, 17 und 18 transportiert und in ihnen auf die gewünschte Temperatur erhitzt. Die Rollen 13 sind einer Antriebseinrichtung M1 und die Rolle 14 einer Antriebseinrichtung M2 zugeordnet.

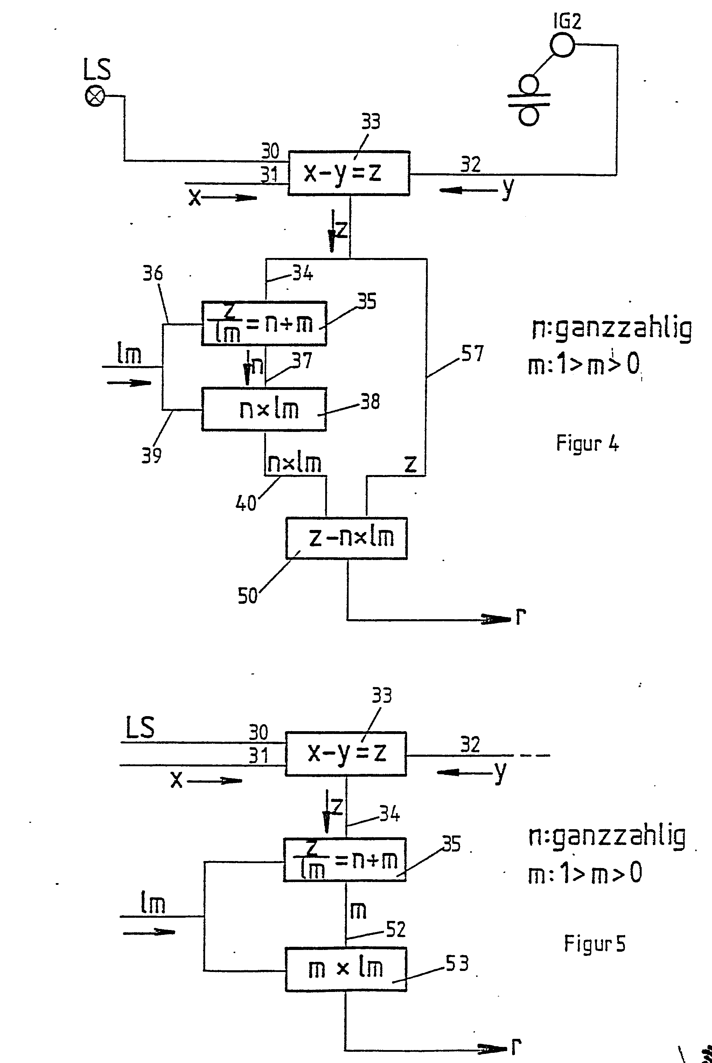

Vor der ersten Induktionsspule 15 tastet ein Impulsgeber IG1 mittels einer Abtastrolle 19 in Verbindung mit einem Zähler Z1 die Metallstange so ab, daß der Anfang der neue Stangen bzw. das Ende der vorherlaufenden Stange verfolgt wird. Sobald die Trennstelle zwischen zwei Stangen den Abstand u von der Scherebene 20 erreicht, übernimmt die Antriebseinrichtung M2 beim nächsten Positioniervorgang den Verschub der Stange. Die Stange wird so von der Rolle 14 bewegt, daß eine Lücke zwischen die beiden aufeinanderfolgenden Stangen entsteht. Sobald das Stangenende die Lichtschranke LS passiert, die im Abstand x von der Scherebene angebracht ist, gibt der Impulsgeber IG2, der mittels der Andrückrolle 21 auf der Metallstange anliegt, Impulse zu einem Zähler Z2 entsprechend dem zurückgelegten Wert y. Die Differenz zwischen dem Abstand x und dem zurückgelegten Wert y entspricht jeweils dem Abstand des Endes der Metallstange von der Scherebene 20. Diese Differenzbildung wird in dem Rechner Cp ausgeführt, auf den in Verbindung mit den Figuren 4 und 5 nachfolgend eingegangen werden soll. Der Rechner CP ist weiterhin noch mit einer Steuerung ST verbunden, an der beispielsweise die Länge der Blöcke einstellbar ist.

In Fig. 4 ist die Berechnung der Restlänge des Abfallstückes mittels einzelner Rechenbausteine dargestellt. Von der Lichtschranke LS wird über die Leitung 30 dem Rechenbaustein 33, einem Additionselement mitgeteilt, wann das Ende der Metallstange die Lichtschranke LS verlassen hat. In diesem Augenblick wird über die Leitung 31 der Wert x, der dem Abstand der Lichtschranke bis zur Scherebene 20 entspricht, in dem Bauelement 33 gespeichert. Weiterhin werden kontinuierlich entsprechend der Weiterbewegung der Metallstange 12 Impulse über die Leitung 32 übertragen, die dem Wert des jeweils zurückgelegten Weges y entsprechen. In dem Baustein 33 werden diese Impulse von dem Wert x subtrahiert, so daß sich der Wert z ergibt, der der jeweiligen Länge des Endes der Stange bis zur Scherebene entspricht. Dieser Wert z wird über die Leitung 34 dem Quotientenbildner 35 zugeführt. Außerdem wird dem Quotientenbildner noch über die Leitung 36 ein Mittelwert der Blocklängen lm zugeleitet. In dem Quotientenbildner 35 wird der Wert z durch den Wert lm dividiert, so daß sich als Ergebnis der Wert n + m ergibt, wobei n eine ganzzahlige Zahl ist und links vom Komma steht, während m einen Wert zwischen 0 und 1 besitzt und rechts vom Komma steht. Für die weitere Rechnung wird nun der ganzzahlige Wert n benutzt, der über die Leitung 37 dem Rechenbaustein 38 zugeleitet wird und in diesem wird dieser Wert mit dem über die Leitung 39 zugeführten Mittelwert der Blocklänge lm multipliziert. Das Produkt wird über die Leitung 40 dem Baustein 50, einem Additionsbaustein, zugeleitet. Diesem Additionsbaustein wird außerdem über die Leitung 51 der Wert z für die Stangenrestlänge zugeführt. In dem Additionsbaustein wird das Produkt n·lm von dem Wert z abgezogen, so daß sich die Restlänge r für das Reststück ergibt. Die Stange wird jetzt auf die Länge r einge stellt, so daß als nächster Block das Reststück abgetrennt wird. Die Länge der verbleibenden Stange entspricht einem Vielfachen der Blocklänge und kann genau in n-Blöcke aufgeschnitten werden.

Die Fig. 5 zeigt eine ähnliche Berechnung der Restlänge r mittels Rechenbausteinen. Von dem Rechenbaustein 33 wird wiederum der Wert z über die Leitung 34 dem Quotientenbildner 35 zugeleitet; statt des genzzahligen Wertes n wird nunmehr der Wert m, der größer als null aber kleiner als eins ist, über die Leitung 52 dem Multiplikationsbaustein 53 übertragen und hier mit dem Mittelwert der Blocklänge lm multipliziert. Das Produkt dieses Bausteines entspricht unmittelbar der Restlänge r des Reststückes der Metallstangen.

Es sei noch darauf hingewiesen, daß die mittlere Blocklänge lm sowohl an der Steuerung ST eingestellt werden kann, aber auch aus vorhergehenden Schnitten, beispielsweise fünf Schnitten, ermittelt werden kann.

## Ansprüche

1. Verfahren zum Minimieren der Reststücke beim Trennen von erwärmten Metallstangen mittels einer Schereinrichtung in Blöcke bestimmter Länge, wobei die Stangen mittels einer Transporteinrichtung durch eine Erwärmungseinrichtung transportiert werden und entsprechend der abzutrennenden Länge auf der Schereinrichtung eingestellt werden, wobei ein Sensor in mindestens dem zweifachen Blocklängenabstand vor der Schereinrichtung vorgesehen ist, der das Ende der Stange feststellt, dadurch gekennzeichnet, daß das Reststück (7) mindestens (spätestens) als vorletzter Block abgeschnitten wird.

2. Schaltungsanordnung zum Minimieren der Reststücke beim Trennen von erwärmten Metallstangen zur Durchführung des Verfahrens nach Anspruch 1, dadurch gekennzeichnet, daß das Stangenende die Enderkennung einschaltet und der zurückgelegte Wert bis zum nächsten Stillsetzen (Abscheren) und damit die Stangenrestlänge (z: bis zu Schere) festgestellt wird, daß in einem Rechenbaustein (35) die Stangenrestlänge (z) durch den Mittelwert (lm) der Blocklängen dividiert wird und aus dem Ergebnis, das aus einer ganzen Zahl (n) links von dem Komma und einer Zahl (m) zwischen 0 und 1 rechts von dem Komma besteht, die ganze Zahl (n) die Anzahl der Blöcke der Reststange ergibt, daß in einem Rechenbaustein (38) das Produkt aus der Anzahl (n) der Blöcke und dem Mittelwert (lm) der Blocklängen gebildet und von der Stangenrestlänge (z) subtrahiert wird, wobei sich die Länge (r) des Reststückes ergibt und daß als nächster Block das Reststück mit der Restlänge (r) abgeschnitten wird.

3. Schaltungsanordnung zum Minimieren der Reststücke beim Trennen von erwärmten Metallstangen zur Durchführung des Verfahrens nach Anspruch 1, dadurch gekennzeichnet, daß das Stangenende die Enderkennung einschaltet und der zurückgelegte Wert bis zum nächsten Stillsetzen (Abscheren) und damit die Stangenrestlänge (z: bis zur Schere) festgestellt wird (im Baustein 33), daß in einem Rechenbaustein (35) die Stangenrestlänge (z) durch den Mittelwert lm der Blocklängen dividiert wird und aus dem Ergebnis, das aus einer ganzen Zahl (n) links von dem Komma und einer Zahl (m) zwischen 0 und 1 rechts von dem Komma besteht, die Zahl (m) zwischen 0 und 1 in einem rechten Baustein (53) mit dem Mittelwert (lm) der Blocklängen multipliziert wird, wobei das Produkt die Länge (r) des Reststückes ergibt und daß als nächster Block das Reststück mit der Restlänge (r) abgeschnitten wird.

4. Schaltungsanordnung zum Minimieren der Reststücke beim Trennen von erwärmten Metallstangen nach einem der Ansprüche 1 oder 2, dadurch gekennzeichnet, daß beim Durchgang des Stangenendes durch eine Lichtschranke ein Zähler auf den Abstand Lichtschranke und Schere (x) eingestellt ist und die entsprechend der Weiterbewegung der Metallstange übertragene Impulse (y) von dem Zählerstand subtrahiert werden (x-y) und der Zähler den jeweiligen Abstand Schere-Stangenende gleich Restlänge (z) anzeigt, daß in einem Divisionsbaustein die Restlänge (z) durch einen Mittelwert der Blocklängen (lm) dividiert wird und das Ergebnis aus einem ganzzahligen Wert n (links von dem Komma stehen) und einem Wert (m) zwischen 0 und 1 (rechts vom Komma steht) besteht, daß der ganzzahlige Wert n mit dem Mittelwert der Blocklängen lm in einem Rechenbaustein muliplizert wird und das Produkt (n x lm) in einem Rechenbaustein von der Restlänge (z) subtrahiert wird und das Ergebnis (z-nlm r) die Restlänge für das Reststück ist und das Reststück als nächster Block abschert wird.

5. Schaltungsanordnung zum Minimieren der Reststücke beim Trennen von erwärmten Metallstangen nach Anspruch 1 oder 3, dadurch gekennzeichnet, daß beim Durchgang des Stangenendes durch eine Lichtschranke ein Zähler auf den Abstand Lichtschranke-Schere (x) eingestellt ist und die entsprechend der Weiterbewegung der Metallstange übertragenen Impulse von dem Zählerstand subtrahiert werden (x-y) und der Zähler den jeweiligen Abstand Schere-Stangenende gleich Restlänge (z) anzeigt, daß in einem Divisionsbaustein die Restlänge (z) durch einen Mittelwert der Blocklängen (lm) dividiert wird und das Ergebnis aus einem ganzzahligen Wert (n: links von dem Komma stehen) und einem Wert (m) zwischen 0 und 1 (rechts von dem Komma stehen) besteht, daß der Wert (m) zwischen 0 und 1 mit dem Mittelwert der Blocklänge lm in einem Rechenbaustein multipliziert und das Ergebnis (m x lm = r) die Länge für das Reststück ergibt und daß als nächster Block das Reststück mit der Restlänge (r) abgeschnitten wird.

Figur 1

Figur 2

Figur 3

Figur 4

n:ganzzahlig
m:1>m>0

Figur 5

n:ganzzahlig
m:1>m>0